# EUROPEAN PATENT APPLICATION

(11) **EP 2 557 035 A2**
(43) Date of publication of application: **13.02.2013**
(21) Application number: 12178563.8
(22) Date of filing: 30.07.2012
(51) Int. Cl.: B64C 25/40

(54) **Landing gear with integrated electric motor for electric taxi system**

(30) Priority: 08.08.2011 US 201113205391
(71) Applicant: Honeywell International Inc., Morristown, NJ 07962-2245 (US)
(72) Inventor: Mirmobin, Parsa, Morristown, NJ New Jersey 07962-2245 (US); Pearson, Wayne, Morristown, NJ New Jersey 07962-2245 (US); Patterson, Delbert, Morristown, NJ New Jersey 07962-2245 (US)
(74) Representative: Houghton, Mark Phillip

(57) **Abstract**

An electric taxi system (ETS) (10) for an aircraft has an electric motor (16) enclosed within a landing gear strut (12). A stator winding (24) of the motor (16) is attached to a lower structural element (22) of the strut.

## Description

### BACKGROUND OF THE INVENTION

The present invention generally relates to aircraft landing gear. More particularly, the invention relates to landing gear with integrated electric drive systems to propel an aircraft during taxiing.

A typical aircraft may taxi on, to, and from runways with thrust force developed by its engines. A significant amount of fuel may be burned by the engines during a typical aircraft taxi profile before and after each flight. In that regard, engine-taxiing can be considered inefficient and contributes to high fuel costs and ground level emissions.

Aircraft designers have sought a more efficient method for propelling an aircraft during taxiing. Electric taxi systems (ETS) have been proposed with higher efficiency. An ETS may be implemented by using electrical motors to provide the motive force for aircraft taxiing. While this general ETS concept holds promise for improved efficiency, there are practical application problems that need to be addressed in any successful ETS design. For example, it is desirable that an ETS not diminish brake capacity and structural strength of wheels of an aircraft. Also, installation of the ETS should not impact normal take-off and landing procedures or aircraft performance. Additionally, an ETS should not add excessive weight to an aircraft.

As can be seen, there is a need for an ETS which may not adversely impact or interact in any way with the aircraft braking system. Additionally there is a need for an ETS that does not interfere with safe aircraft operation during normal take-off and landing cycles. Also, the ETS system should only minimally impact existing aircraft structures and weight, (e.g., landing gear, landing gear doors, and wheel well configuration).

### SUMMARY OF THE INVENTION

In one aspect of the present invention, an electric taxi system (ETS) for an aircraft may comprise an electric motor enclosed within a landing gear strut, wherein stator windings of the motor are attached to a lower structural element of the strut.

In another aspect of the present invention, an electric motor for an electric taxi system of an aircraft may comprise a stator winding supported on a structural element of a landing gear strut of the aircraft.

In still another aspect of the invention, a method for providing taxiing movement of an aircraft may comprise the steps of: providing for an electric motor in a landing gear strut of the aircraft; and controlling current to the motor to drive a wheel of the aircraft, wherein the step of controlling current comprises applying current to a stator winding of the motor.

These and other features, aspects and advantages of the present invention will become better understood with reference to the following drawings, description and claims.

### BRIEF DESCRIPTION OF THE DRAWINGS

Figure 1 is a partial sectional view of an electric taxi system (ETS) for an aircraft in accordance with an embodiment of the invention;

Figure 1A is a detailed view of a portion of the ETS of Figure 1;

Figure 2 is a partial sectional view of an ETS in accordance with a second embodiment of the invention;

Figure 2A is a detailed view of a portion of the ETS of Figure 2;

Figure 3 is a partial sectional view of an ETS in accordance with a third embodiment of the invention; and

Figure 4 is a flowchart of a method for performing taxiing movement of an aircraft in accordance with an embodiment of the invention.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features.

Broadly, embodiments of the present invention generally provide an electric taxi system (ETS) for an aircraft in which a driving motor may be incorporated into a strut of a landing gear assembly of the aircraft.

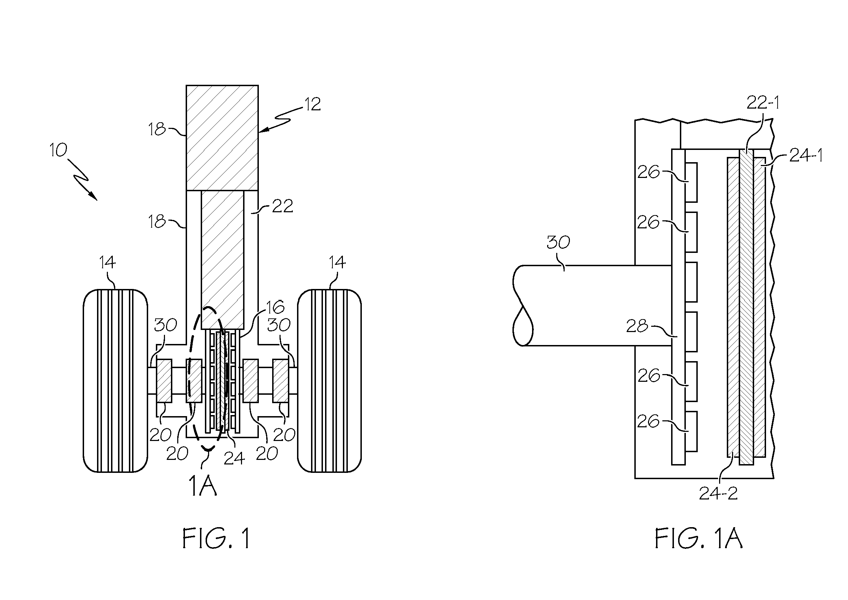

Referring now to Figure 1, it may be seen that an exemplary embodiment of an electric taxi system (ETS) 10 may comprise a landing gear strut 12, wheels 14 and a motor 16. The strut 12 may comprise an upper housing 18, bearings 20, and a lower structural element 22. The motor 16 may comprise stator windings 24 (attached to a lower portion of the structural element 20 of the strut 12. The motor 16 may be a permanent magnet motor with magnets 26 attached to rotor discs 28. The rotor discs 28 may be attached to wheel shafts 30. In the configuration shown in Figure 1, the motor 16 may be referred to as an axial-gap motor.

In operation, a motor controller (not shown) may be controlled by a pilot of the aircraft to apply electric controlled current to the stator windings 24. The magnets 26 may react to the current in the stator windings 24, thus producing torque and rotation of the rotor discs 28 and the wheel shafts 30. A stator winding 24-1 on a left side of the strut 12 may be energized differently from a stator winding 24-2 on a right side of the strut 12. This may allow for rotation of the right one of the wheel 14 at a different speed from that of the left one of the wheels 14. In this manner, the ETS 10 may be used to taxi an aircraft with a multiple-wheel landing gear around a turn wherein one wheel must rotate at a different speed from another wheel.

It may be noted that the motor 16 may be enclosed within the lower structural element 22 of the strut 12. Consequently, the motor 16 may be kept isolated from dust, dirt or debris that may be present on an airport runway or taxiway. The lower structural element 22 of the strut 12 may be a requisite structural component of a landing gear assembly. Thus, enclosure of the motor 16 within the strut 12 may provide a benefit of achieving enclosure of the motor 16 without incurring weight penalties that might result from providing a separate enclosing housing for the motor 16.

Similarly, the lower structural element 22 and its lower portion 22-1 may provide a dual benefit, producing requisite structural strength for the strut 12 and support for the stator windings 24-1 and 24-2. Thus, support of the stator windings 24-1 and 24-2 the lower structural element 22 may provide a benefit of achieving support for the windings without incurring weight penalties that might result from providing a separate supporting structure for the motor 16.

It may also be noted that the motor 16 may be positioned so that it is not in direct contact with the wheels 14. Such an arrangement may be advantageous because brake assemblies (not shown) in the wheels 14 may become hot as a result of braking during landing. In some instances, it may be necessary to reduce the temperature of the brake assemblies before the aircraft may proceed to a subsequent take-off. In other words, an aircraft needs to have cool brakes before initiating a takeoff roll so that, in the event of a need to perform a rejected take-off, the brakes will perform effectively.

If the motor 16 were in contact with the wheels 14, then heat produced by operation of the motor 16 might produce undesirable heating of brake assemblies. Conversely, heat from the brake assemblies might result in overheating of the motor 16.

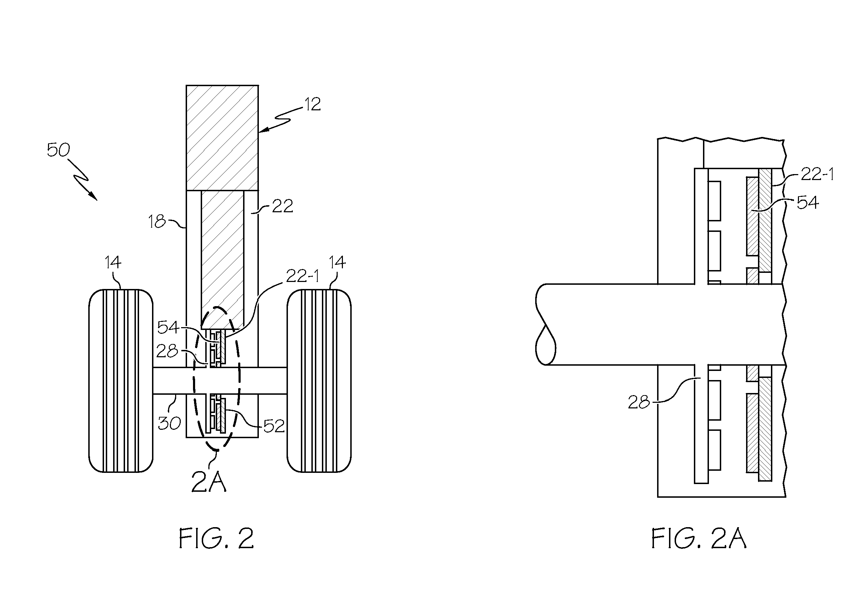

Referring now to Figure 2, it may be seen that another exemplary embodiment of an ETS 50 may comprise a motor 52 with a single stator winding 54. The ETS 50 may be constructed at a lower cost than the ETS 10 and may be useful on single-wheel landing gear or in applications that do not require that wheels of a landing gear rotate at different speeds

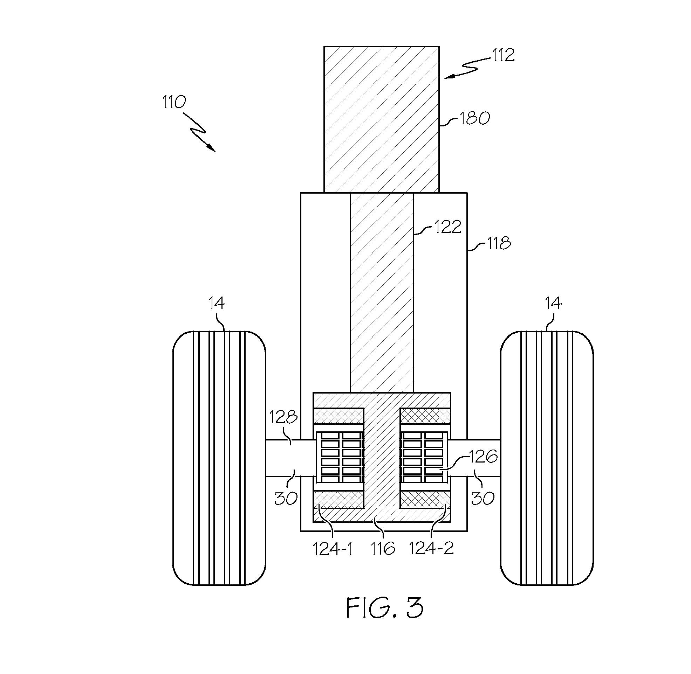

Referring now to Figure 3, another exemplary embodiment of an ETS 110 may comprise a landing gear strut 112, wheels 14 and a motor 116. The strut 112 may comprise an upper housing 180 and an lower structural element 122. The motor 116 may comprise stator windings 124-1 and 124-2 attached to the inner structural element 122. The motor 116 may be a permanent magnet motor with magnets 126 attached to rotors 128. The rotors 128 may be attached to wheel shafts 30. In the configuration shown in Figure 3, the motor 116 may be referred to as a radial-gap motor.

In operation, a motor controller (not shown) may be controlled by a pilot of the aircraft to apply controlled electric current to the stator windings 124-1 and 124-2. The magnets 126 react to the current in the stator windings, thus producing torque and rotation of the wheel shafts 30. The stator winding 124-1 on a left side of the strut 112 may be energized differently from the stator winding 124-2 on a right side of the strut 112. This may allow for rotation of the right one of the wheels 14 at a different speed from that of the left one of the wheels 14. In this manner, the ETS 110 may be used to taxi an aircraft with a multiple-wheel landing gear around a turn wherein one wheel must rotate at a different speed from the another wheel.

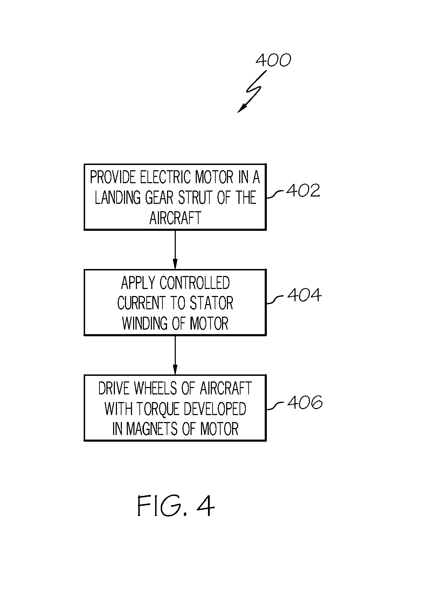

Referring now to Figure 4, it may be seen that a flow chart 400 may illustrate an exemplary embodiment of a method for providing taxiing movement of an aircraft. In a step 402, an electric motor may be provided in a landing gear strut of the aircraft, (e.g., the motor 16 may be provided in the strut 12 of the ETS 10). In a step 404, controlled current may be applied to the motor to drive a wheel of the aircraft (e.g. controlled current may be applied to the stator 24-1 or 24-2 and torque may be produced through the magnets 26). In a step 406, one or more of the wheels of the aircraft may be driven (e.g., torque developed in the magnets 26 may be applied to the wheels 14 through the rotor discs 28 and the wheel shafts 30). In a particular exemplary embodiment, step 404 may be performed by applying a first controlled current to a first stator winding 24-1 of the motor 16 and applying a second controlled current to a second stator winding 24-2 of the motor 16.

It should be understood, of course, that the foregoing relates to exemplary embodiments of the invention and that modifications may be made without departing from the spirit and scope of the invention as set forth in the following claims.

## Claims

1. An electric taxi system (ETS) (10 or 110) for an aircraft comprising an electric motor (16 or 116) enclosed within a landing gear strut (12 or 112), wherein stator windings (24 0r 124-1 and 124-2) of the motor (16 or 116) are attached to a lower structural element (22 or 122) of the strut (12 or 112).

2. The ETS of claim 1 wherein the motor (16 or 116) is a permanent magnet motor.

3. The ETS of claim 2 wherein the motor (116) has a radial-gap configuration.

4. The ETS of claim 2 wherein the motor (16) has an axial-gap configuration.

5. The ETS (10 or 110) of claim 1 wherein the motor (16 or 116) comprises:
a first stator winding (24-1 or 124-1); and
a second stator winding (24-2 or 124-2),
wherein the first and second stator windings are positioned so that a first controlled current in the first stator winding produces a first controlled rotation of a first wheel of the aircraft and a second controlled current in the second stator winding produces a second controlled rotation of a second wheel of the aircraft, and
wherein the first and second wheels are supported on the landing gear strut (12 or 112).
